# EUROPÄISCHE PATENTANMELDUNG

(11) **EP 4 663 475 A2**
(43) Veröffentlichungstag der Anmeldung: **17.12.2025**
(21) Anmeldenummer: 25178696.8
(22) Anmeldetag: 26.05.2025
(51) Int. Cl.: B60N 2/28, B60N 3/06

(54) **VERRIEGELUNGSVORRICHTUNG, FUSSSTÜTZEINHEIT, KINDERSITZ UND VERFAHREN**

(30) Priorität: 10.06.2024 DE 102024116072; 02.07.2024 DE 102024118675
(71) Anmelder: Emmaljunga Holding AB, 28268 Vittsjö (SE)
(72) Erfinder: Edvardsson, Joakim, 28143 Hässleholm (SE); Bost, Bart Willem Jozef, 6216 PS Maastricht (NL); De Graaff, Marc Geradus Jozef, 6229 HW Maastricht (NL); Joosten, Alexander Johan Louis, 6041 MJ Roermond (NL)
(74) Vertreter: Müller Schupfner & Partner Patent- und Rechtsanwaltspartnerschaft mbB (Muc)

(57) **Zusammenfassung**

Verriegelungsvorrichtung (10) für einen Kindersitz (11), wobei die Verriegelungsvorrichtung (10) zum Freigeben und Festlegen einer Rückenlehne (12), insbesondere zum Einstellen einer Neigung der Rückenlehne (12), und/oder einer Gurtanordnung (13), insbesondere zum Einstellen einer Länge von Gurtbändern der Gurtanordnung (13), ausgestaltet ist.

## Beschreibung

Die vorliegende Erfindung betrifft eine Verriegelungsvorrichtung für einen Kindersitz. Ferner betrifft die vorliegende Erfindung eine Fußstützeinheit, einen Kindersitz und ein Verfahren.

Kinderwagen oder ähnliche Fahrzeuge für Kinder sind aus dem Stand der Technik bekannt. Solche Kinderwagen umfassen Sitzeinheiten, bei denen die Rückenlehne umgelegt werden kann, sodass ein Kind auf dem Sitz eine zurückgelehnte Position einnehmen kann. In der Regel wird das Kind auf dem Sitz angeschnallt, normalerweise mit einem längenverstellbaren Sicherheitsgurt, der in der Regel aus einer oder mehreren Schlaufen besteht, die mittels einer Schnalle verbunden sind. In der Regel kann der Sitz durch einen Griff an der Kante der Rückenlehne in der Neigung verstellt werden. Das Problem dabei ist, dass der Abstand zur Schnalle mit zunehmendem Neigungswinkel der Rückenlehne größer wird. Wenn das Kind älter und größer wird, sind außerdem eine größere Länge und andere Verankerungspunkte für die Schultergurte erforderlich. Da die Länge der Gurtbänder in der Regel festgelegt ist, werden die Gurtbänder verlängert und gestreckt, wodurch das Kind zusammengedrückt wird und die Neigungsbewegung weiter verhindert wird.

Bekannte Lösungen für dieses Problem bestehen darin, dass für einen Teil oder das gesamte Gurtband elastisches Material verwendet wird, sodass es das Gurtband ausdehnen und die Ausdehnungsstrecke während der Rückwärtsbewegung abdecken kann. Dies birgt jedoch das Risiko, dass das Kind nicht sicher angeschnallt ist und sich aufgrund der Flexibilität des Gurtbandes selbständig aus diesem befreien kann. Andere Lösungen bestehen darin, die Länge der Gurtbänder vor dem Zurücklehnen des Sitzes manuell anzupassen. Dies ist jedoch unpraktisch, da die Länge der Gurtbänder in Abhängigkeit von der Neigung des Sitzes geschätzt werden muss und mehrere Anpassungsschritte erforderlich sind.

Es hat sich somit herausgestellt, dass ein Bedarf besteht, eine verbesserte Vorrichtung bereitzustellen, um einen Kindersitz zu verstellen.

Die Aufgabe mit Blick auf das oben genannte Problem wird durch eine Verriegelungsvorrichtung mit den Merkmalen des Anspruchs 1, mit einer Fußstützeinheit mit den Merkmalen des Anspruchs 9, mit einem Kindersitz mit den Merkmalen des Anspruchs 12 und mit einem Verfahren mit den Merkmalen des Anspruchs 15.

Ein erster Aspekt der vorliegenden Erfindung betrifft eine Verriegelungsvorrichtung für einen Kindersitz, wobei die Verriegelungsvorrichtung zum Freigeben und Festlegen einer Rückenlehne, insbesondere zum Einstellen einer Neigung der Rückenlehne, und/oder einer Gurtanordnung, insbesondere zum Einstellen einer Länge von Gurtbändern der Gurtanordnung, ausgestaltet ist.

Gegenüber dem bekannten Stand der Technik weist die vorliegende Erfindung den Vorteil auf, dass es möglich ist, gleichzeitig die vorübergehende Freigabe/Lockerung der Gurtbänder der Gurtanordnung und der Rückenlehne auszulösen. Dadurch ist es möglich, gleichzeitig eine Neigung der Rückenlehne als auch die Länge der Gurtbänder der Gurtanordnung in einem einzigen Schritt einzustellen. Zumindest ermöglicht die vorliegende Erfindung, dass zum Freigeben der Rückenlehne und der Gurtanordnung eine einzige Verriegelungsvorrichtung vorgesehen ist. Der Mechanismus der Verriegelungsvorrichtung kann zum Einstellen der Sitzeinheit folglich zwei Funktionen gleichzeitig erfüllen, ohne die Sicherheit des Kindes zu beeinträchtigen. Zum einen kann die Rückenlehne selbst zurückgelegt werden, wodurch sich die Geometrie der Gurtabstände ändert. Um für das Kind nicht zu klein zu werden, kann gleichzeitig im gleichen Schritt der mittels der Verriegelungsvorrichtung der Gurtstraffer betätigt werden, um die Gurte automatisch an die neue Position der Rückenlehne anzupassen und die Länge der Gurtbänder zu vergrößern. Auf diese Art und Weise ist eine sichere und komfortable Fahrt für das Kind möglich.

Die Verriegelungsvorrichtung gemäß der vorliegenden Erfindung ist vorzugsweise an einem Kindersitz angeordnet. Die Verriegelungsvorrichtung weist eine Doppelfunktion auf. Die Verriegelungsvorrichtung ist dazu vorgesehen die Rückenlehne des Kindersitzes freizugeben oder festzulegen und die Verriegelungsvorrichtung ist ferner dazu vorgesehen, die Gurtanordnung freizugeben oder festzulegen.

Durch Betätigen der Verriegelungsvorrichtung kann die Neigung der Rückenlehne eingestellt werden. Vorzugsweise kann die Verriegelungsvorrichtung hierzu mit einem einen Arretiermechanismus des Kindersitzes gekoppelt sein. Die Verriegelungsvorrichtung kann zum Fixieren der Gurtanordnung mit einem Gurtband der Gurtanordnung gekoppelt sein. Die Verriegelungsvorrichtung ist derart ausgestaltet, dass das Freigeben bzw. das Festlegen der Rückenlehne und der Gurtanordnung im Wesentlichen gleichzeitig erfolgen kann.

Unter der Rückenlehne ist der Bereich des Kindersitzes zu verstehen, der zum Stützen des Rückens des Kindes vorgesehen ist. Die Rückenlehne des Kindersitzes ist in der Regel in der Neigung verstellbar. Insbesondere kann die Rückenlehne beispielsweise um einen Schwenkachse schwenkbar angeordnet sein. Dadurch kann ein Kind von einer sitzenden Position in eine zumindest annähernd liegende Position gebracht werden.

Eine Gurtanordnung kann im Rahmen der vorliegenden Erfindung beispielsweise als ein Vier-Punkt-Gurtsystem, ein Fünf-Punkt-Gurtsystem oder ein Sechs-Punkt-Gurtsystem ausgebildet sein. Andere Gurtsysteme sind ebenfalls denkbar. Das Gurtsystem umfasst Schnallen und ein Gurtsystem, das bei Autositzen üblich bzw. Standard ist. Schultergurte können beispielsweise durch einen Schlitz in der Schnalle verlaufen und gleichzeitig den Hüftgurt bilden. Dadurch ist es möglich, dass der Hüft- und Schultergurt immer gleichmäßig angepasst/gespannt werden kann. Die Gurtanordnung umfasst vorzugsweise mehrere Gurtbänder. Die Gurtbänder können beispielsweise Hüftgurte und Schultergurte umfassen. Die einzelnen Gurtbänder sind vorzugsweise dazu vorgesehen, in einem gemeinsamen Punkt miteinander verbunden zu werden, beispielsweise durch eine Schnallenvorrichtung. So kann sich der einzelne Verstellgurt in zwei Y- oder T-förmige Gurte aufteilen, so dass mit einem zentralen Verstellgurt den linken und den rechten Hüft-/Schultergurt mit einer Aktion verstellbar ist. So kann die Gurtanordnung immer gleichmäßig über den Körper des Kindes gespannt sein.

Der Mechanismus der Verriegelungsvorrichtung kann zum Einstellen der Sitzeinheit zwei Funktionen gleichzeitig erfüllen, ohne die Sicherheit des Kindes zu beeinträchtigen. Zum einen kann die Rückenlehne selbst zurückgelegt werden, wodurch sich die Geometrie der Gurtabstände ändert. Um für das Kind nicht zu klein zu werden, kann gleichzeitig im gleichen Schritt der Gurtstraffer betätigt werden, um die Gurte automatisch an die neue Position der Rückenlehne anzupassen und die Länge der Gurtbänder zu vergrößern. Auf diese Art und Weise ist eine sichere und komfortable Fahrt für das Kind möglich.

In einer Ausführungsform umfasst die Verriegelungsvorrichtung ein Griffelement, wobei die Verriegelungsvorrichtung dazu ausgestaltet ist, dass durch ein Betätigen des Griffelements die Rückenlehne und/oder die Gurtanordnung freigegeben und festgelegt werden kann. Das Griffelement kann auch als Betätigungselement bezeichnet werden. Das Griffelement wird zum Betätigen der Verriegelungsvorrichtung verlagert. Insbesondere wird die Position des Griffelements durch eine manuelle Manipulation verändert. Das Griffelement ist vorzugsweise um eine Drehachse beweglich, insbesondere drehbar gelagert. Beim Betätigen des Griffelements wird das Griffelement folglich zumindest teilweise um die Drehachse bewegt. Anders gesagt kann durch ein Ziehen am Griffelement die Rückenlehne und/oder die Gurtanordnung freigegeben und anschließend durch Loslassen oder Drücken des Griffelements wieder festgelegt werden. Das bedeutet, dass das Festlegen bzw. Freigeben der Rückenlehne und/oder der Gurtanordnung durch eine einzige Aktion bzw. Bewegung des Griffelements erfolgen kann. Vorzugsweise werden die Rückenlehne und die Gurtanordnung gemeinsam bzw. annähernd zeitgleich durch das Griffelement freigegeben und wieder festgelegt.

In einer Ausführungsform umfasst die Verriegelungsvorrichtung eine erste Riegeleinheit, die dazu ausgestaltet ist, die Rückenlehne freizugeben und festzulegen, eine zweite Riegeleinheit, die dazu ausgestaltet ist, die Gurtanordnung freizugeben und festzulegen, wobei die erste Riegeleinheit mit der zweiten Riegeleinheit gekoppelt ist, sodass die erste Riegeleinheit und die zweite Riegeleinheit durch das Griffelement betätigbar sind. Anders gesagt ist die erste Riegeleinheit vorgesehen, um die Rückenlehne freizugeben und festzulegen und die zweite Riegeleinheit dazu vorgesehen die Gurtanordnung freizugeben und festzulegen. An der ersten Riegeleinheit ist das Griffelement angeordnet. Das bedeutet, dass die ersten Riegeleinheit unmittelbar von dem Griffelement betätigt wird. Die erste Riegeleinheit ist mit der zweiten Riegeleinheit gekoppelt. Das bedeutet, dass die erste Riegeleinheit und die zweite Riegeleinheit kraftübertragend miteinander verbunden sind. Anders gesagt, kann eine Bewegung der ersten Riegeleinheit auf die zweite Riegeleinheit übertragen werden. In anderen Worten ist die zweite Riegeleinheit indirekt über die erste Riegeleinheit mit dem Griffelement verbunden. Ein Betätigen der ersten Riegeleinheit über das Griffelement hat somit eine Betätigung des zweiten Trägerelements zur Folge.

In einer Ausführungsform umfasst die erste Riegeleinheit einen Fortsatz, der mit der zweiten Riegeleinheit zusammenwirkt, sodass eine Bewegung und/oder eine Kraft von der ersten Riegeleinheit auf die zweite Riegeleinheit übertragbar ist. Der Fortsatz rotiert mit dem Griffelement um eine Rotationsachse. Das bedeutet, dass der Fortsatz mit dem Griffelements verbunden sein kann. Der Fortsatz kann als ein Stift, ein Steg oder ähnliches ausgestaltet sein. Der Fortsatz kann mit der zweiten Riegeleinheit in Kontakt stehen bzw. derart an der ersten Riegeleinheit angeordnet sein, dass eine Kraft bzw. eine Bewegung von der ersten Riegeleinheit auf die zweite Riegeleinheit durch Betätigen des Griffelements übertragbar ist.

In einer Ausführungsform weist die zweite Riegeleinheit ein Federelement auf, das dazu ausgestaltet ist, eine Rückstellkraft bereitzustellen. Genauer gesagt wirkt die Rückstellkraft auf die zweite Riegeleinheit, sodass die zweite Riegeleinheit bei nicht betätigtem Griffelement die Gurtanordnung festlegt. Bei einem Betätigten Griffelement wirkt die Rückstellkraft gegen die Auslenkung des Griffelements, sodass nach Loslassen des Griffelements das Griffelement wieder in eine Ausgangsposition zurückkehrt. Die zweite Riegeleinheit kann beispielsweise ein Klemmelement aufweisen, das um eine weitere Drehachse, die von der Drehachse des Griffelements verschieden ist, rotierbar ist. Im Bereich der Drehachse kann eine Torsionsfeder angeordnet sein, die die Rückstellkraft auf das Klemmelement ausübt. Die Rückstellkraft ist so groß, dass ein Verstellen der Gurtanordnung verhindert ist.

In einer Ausführungsform sind die erste Riegeleinheit und die zweite Riegeleinheit aus unterschiedlichen Materialien hergestellt. Beispielsweise ist die erste Riegeleinheit aus einem Kunststoff hergestellt und die zweite Riegeleinheit aus Metall hergestellt. Alternativ können weitere Riegeleinheiten aus dem gleichen Material, beispielsweise Metall oder Kunststoff, hergestellt sein.

In einer Ausführungsform ist das Griffelement in eine erste Position und in eine zweite Position überführbar, wobei in der ersten Position die zweite Riegeleinheit betätigt ist und in der zweiten Position die erste Riegeleinheit und die zweite Riegeleinheit betätigt sind. Insbesondere ist in der ersten Position ausschließlich die zweite Riegeleinheit betätigt. Die erste Position und die zweite Position des Griffelements können jeweils durch unterschiedlich zurückgelegte Wegstrecken bzw. Verlagerungen des Griffelements definiert sein. Beispielsweise kann die Auslenkung bzw. Verlagerung des Griffelements in der ersten Position zwischen 10 % und 50 %, insbesondere zwischen 30 % und 50 %, einer möglichen Gesamtauslenkung betragen. Die Auslenkung bzw. Verlagerung des Griffelements in der zweiten Position kann zwischen 50 % und 100 %, insbesondere zwischen 50 % und 70 %, der möglichen Gesamtauslenkung betragen. Dadurch ist es möglich, die Gurtanordnung einzustellen, ohne dass dabei die Arretierung der Rückenlehne gelöst wird.

In einer Ausführungsform ist die erste Riegeleinheit mit einem Arretiermechanismus gekoppelt, und die zweite Riegeleinheit mit der Gurtanordnung gekoppelt. Der Arretiermechanismus ist der Mechanismus, der die Rückenlehne in einer gewünschten Position arretiert bzw. fixiert. Der Arretiermechanismus kann durch Betätigen der Verriegelungsvorrichtung geöffnet und wieder geschlossen werden.

Das bedeutet, dass durch Betätigen des Griffelements der Arretiermechanismus geöffnet und wieder geschlossen werden kann.

In einer Ausführungsform umfasst der Arretiermechanismus ein Sternrad, das konzentrisch um eine Schwenkachse der Rückenlehne angeordnet ist, wobei das Sternrad mittels einer Betätigungsstange mit der Verriegelungsvorrichtung verbunden ist, wobei die Betätigungsstange vorzugsweise über ein Gelenk mit der ersten Riegeleinheit mechanisch gekoppelt ist, und das Sternrad zumindest eine Kulisse aufweist, die mit einer korrespondierenden Geometrie der Betätigungsstange derart zusammenwirkt, dass das Sternrad von einem gekoppelten Zustand in einen nicht gekoppelten Zustand überführbar ist. Die korrespondierende Geometrie kann auch als Vorsprung bezeichnet werden. Genauer gesagt, ist das Sternrad durch eine lineare Bewegung der Betätigungsstange unter einem gekoppelten Zustand in einen nicht gekoppelten Zustand überführbar. Die Kulissen bewirken zusammen mit der korrespondieren Geometrie, dass sich das Sternrad in eine Richtung orthogonal zur Bewegungsrichtung der Betätigungsstange bewegt.

In einer Ausführungsform umfasst der Arretiermechanismus ein Federelement, das das Sternrad mit einer Rückstellkraft beaufschlagt. Durch die Rückstellkraft kann das Sternrad von der nicht gekoppelten Position in die gekoppelte Position zurück überführt werden. In anderen Worten wirkt die Rückstellkraft der von der Betätigungsstange ausgeübten Kraft entgegen. Das Federelement kann als eine Schraubenfeder ausgestaltet sein.

Ein weiterer Aspekt der vorliegenden Erfindung betrifft eine Fußstützeinheit für einen Kindersitz, wobei die Fußstützeinheit eine Fußstützkomponente und eine Entriegelungskomponente umfasst, wobei zumindest die Entriegelungskomponente einteilig ausgebildet ist. Dadurch ist es möglich, die Fußstützeinheit mit geringem Arbeitsaufwand und geringem Kostenaufwand herzustellen. Vorzugsweise sind jeweils die Fußstützkomponente und die Entriegelungskomponente einteilig ausgebildet. Unter einteilig kann verstanden werden, dass nur ein einziges Herstellungsverfahren notwendig ist. Beispielsweise kann die Fußstützkomponente und die Entriegelungskomponente jeweils durch Spritzgießen hergestellt sein. Es ist möglich, dass die Fußstützkomponente und die Entriegelungskomponente aus dem gleichen Material hergestellt sind.

In einer Ausführungsform umfasst die Entriegelungskomponente einen Entriegelungsgriff und zwei Sicherungsstifte, wobei die zwei Sicherungsstifte und der Entriegelungsgriff durch flexible Stegabschnitte miteinander verbunden sind. Die Sicherungsstifte dienen dazu, die Position der Fußstützeinheit im eingebauten Zustand festzulegen. Dadurch kann eine gewünschte Neigung der Fußstützeinheit eingestellt werden.

In einer Ausführungsform weisen die Stegabschnitte zumindest abschnittsweise Federeigenschaften auf, sodass auf die Sicherungsstifte jeweils eine Rückstellkraft wirkt. Beispielsweise weisen die Stegabschnitte eine bogenförmige Geometrie auf, die die Sicherungsstifte mit einer Federkraft beaufschlagt. Vorzugsweise sind die bogenförmigen Abschnitte im Bereich der Sicherungsstifte angeordnet. Ferner kann der Entkopplungsabschnitt zumindest abschnittsweise aus einem elastischen Material gefertigt sein. So kann sich die Entriegelungskomponente durch ein Ziehen am Entriegelungsgriff verformen, sodass die Sicherungsstifte die Fußstützeinheit zum Verstellen freigeben. Anschließend bewirkt die Rückstellkraft, dass die Sicherungsstifte wieder die Fußstützeinheit festlegen bzw. fixieren.

Ein weiterer Aspekt der vorliegenden Erfindung betrifft einen Kindersitz, insbesondere zur Verwendung mit einem Chassis, mit einem Sitzelement und einer Rückenlehne, umfassend eine Verriegelungsvorrichtung nach einer der vorhergehenden Ausführungsformen und/oder eine Fußstützeinheit nach einer der vorhergehenden Ausführungsformen.

In einer Ausführungsform weist der Kindersitz eine flexible Sitzplatte auf, die beweglich zwischen dem Sitzelement und der Rückenlehne angeordnet ist, wobei das Sitzelement einen Freiraum umfasst, in dem die flexible Sitzplatte geführt ist. Der Freiraum ist in dem Sitzelement angeordnet. Vorzugsweise ist der Freiraum ein schmaler spaltartiger Raum. Anders gesagt, kann der Freiraum als ein Schlitz bezeichnet werden, der sich in das Sitzelement hineinerstreckt. Der Freiraum erstreckt sich im Wesentlichen parallel zum Sitzelement, insbesondere parallel zur Unterseite des Sitzelements. Dadurch kann die Sitzplatte in dem Sitzelement geführt werden und bei einer geneigten Rückenlehne größtenteils in dem Sitzelement angeordnet sein. Die Sitzplatte ist vorzugsweise aus Polyethylen hergestellt.

In einer Ausführungsform umfasst die Rückenlehne eine Kopfstütze, die beweglich an der Rückenlehne angeordnet ist, wobei zwei Schultergurte einer Gurtanordnung jeweils durch eine Öffnung der Kopfstütze geführt und mit der Rückenlehne verbunden sind, sodass durch ein Bewegen der Kopfstütze die Position und/oder die Länge der Schultergurte der Gurtanordnung einstellbar ist/sind.

Ein weiterer Aspekt der vorliegenden Erfindung betrifft ein Verfahren zum Einstellen der Neigung eines Kindersitzes mit einer Verriegelungsvorrichtung nach einem der vorhergehenden Ausführungsformen, umfassend die Schritte: Betätigen der Verriegelungsvorrichtung, Einstellen der Neigung der Rückenlehne und/oder Einstellen der Gurtanordnung, insbesondere zeitgleiches Einstellen der Gurtanordnung und der Rückenlehne.

Einzelne Merkmale und Ausführungsformen der vorliegenden Erfindung können mit anderen Merkmalen in anderen Ausführungsform kombiniert werden und so neue Ausführungsformen bilden. Vorteile und Weiterbildungen, die für die Merkmale oder Ausführungsformen genannt sind, gelten analog auch für die neuen Ausführungsformen. Weiterbildungen und Vorteile, die in Zusammenhang mit der Vorrichtung genannt sind, gelten analog auch für das Verfahren und andersherum.

Im Folgenden wird die Offenbarung beispielhaft unter Bezugnahme auf die beigefügten Figuren beschrieben, in denen zeigen
- **Figur** 1:: eine perspektivische Ansicht einer Ausführungsform eines erfindungsgemäßen Kindersitzes;
- **Figur 2:**: eine weitere perspektivische Ansicht des Kindersitzes gemäß der Figur 1;
- **Figur 3:**: eine Detailansicht des Kindersitzes gemäß Figur 2,
- **Figur 4:**: eine perspektivische Ansicht einer Ausführungsform einer erfindungsgemäßen Verriegelungsvorrichtung,
- **Figur 5:**: eine perspektivische Ansicht einer Ausführungsform einer erfindungsgemäßen Verriegelungsvorrichtung mit Arretiermechanismus,
- **Figur 6:**: eine Detailansicht des Arretiermechanismus gemäß Figur 5,
- **Figur 7:**: eine weitere perspektivische Ansicht des Kindersitzes gemäß der Figur 1;
- **Figur 8:**: eine weitere perspektivische Ansicht des Kindersitzes gemäß der Figur 1;
- **Figur 9:**: eine perspektivische Ansicht einer Ausführungsform einer erfindungsgemäßen Fußstützeinheit,
- **Figur 10:**: eine perspektivische Ansicht einer Fußstützkomponente,
- **Figur 11:**: eine perspektivische Ansicht einer Entriegelungskomponente, und
- **Figur 12:**: eine schematische Ansicht einer Ausführungsform eines erfindungsgemäßen Verfahrens zum Neigen einer Rückenlehne.

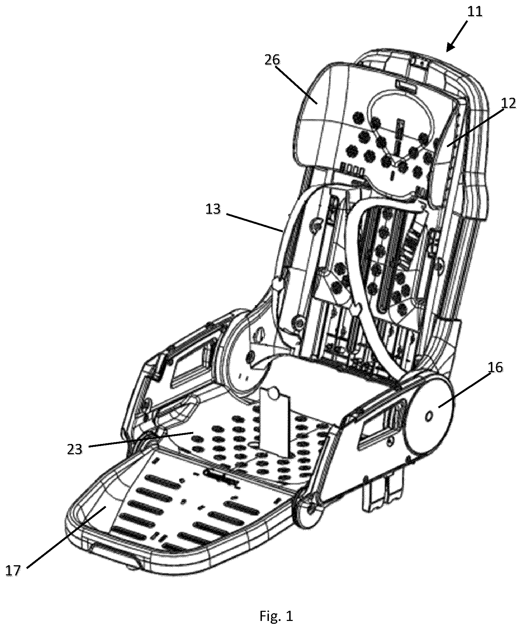

Figur 1 zeigt einen Kindersitz 11. Der Kindersitz 11 umfasst eine Rückenlehne 12, ein Sitzelement 23 und eine Fußstützeinheit 17. Der Kindersitz 11 ist mit Vorteil zur Montage, bzw. Festlegung auf einem Chassis bzw. einem Fahrgestell vorgesehen. Alternativ kann der Kindersitz 11 zur Montage in einem Fahrzeug vorgesehen sein.

An der Rückenlehne 12 ist eine Gurtanordnung 13 angebracht. Die Gurtanordnung 13 ist in dieser Ausführungsform als ein Mehr-Punkt-Gurtsystem, insbesondere als ein Fünf-Punkt-Gurtsystem ausgebildet. Die Gurtanordnung 13 umfasst zwei Schultergurte, die im Betrieb des Kindersitzes 11 an den Schultern eines Kindes anliegen. Die Schultergurte erstrecken sich mit einem axialen Ende durch eine Öffnung 27 in einer Kopfstütze 26 und sind mit der Rückenlehne 12 verbunden. Die Kopfstütze 26 ist beweglich an der Rückenlehne 12 angeordnet bzw. montiert. Genauer gesagt, kann die Position der Kopfstütze 26 in Längsrichtung der Rückenlehne 12 verändert werden. Dadurch kann die Position der Schultergurte sowie die Länge der Schultergurte mit einem Verschieben der Kopfstütze 26 mit angepasst werden, da sich die Öffnungen 27, durch die sich die Schultergurte erstrecken, ebenfalls verschieben.

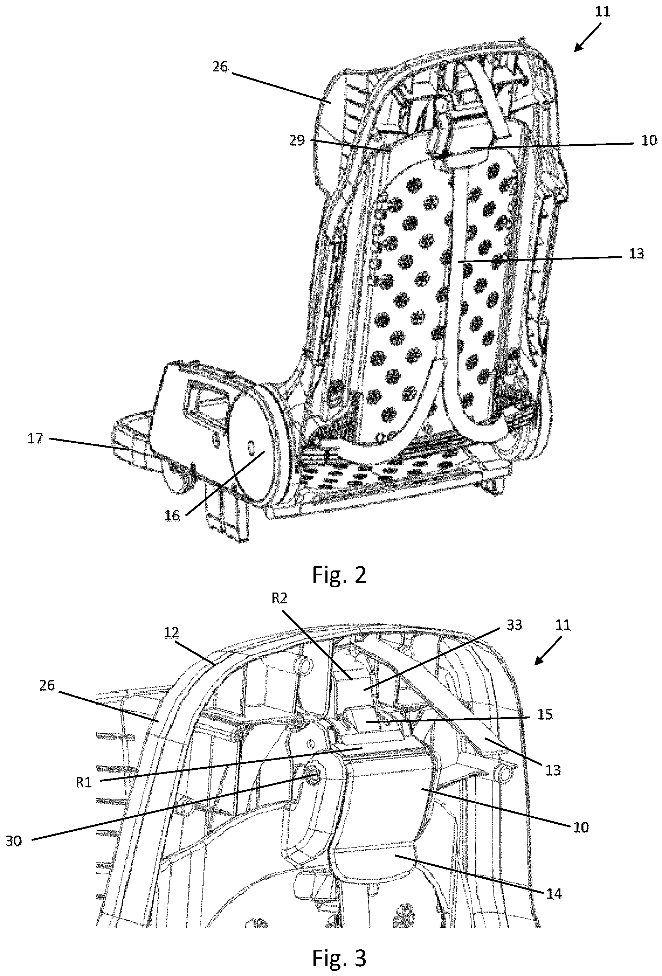

Figur 2 und Figur 3 zeigen jeweils eine Ansicht einer Rückseite der Rückenlehne 12. Die Rückseite ist die Seite, die im Betrieb von einem auf dem Kindersitz 11 sitzenden Kind abgewandt ist. An der Rückseite ist eine Verriegelungsvorrichtung 10 angeordnet. Die Verriegelungsvorrichtung 10 umfasst ein Griffelement 14.

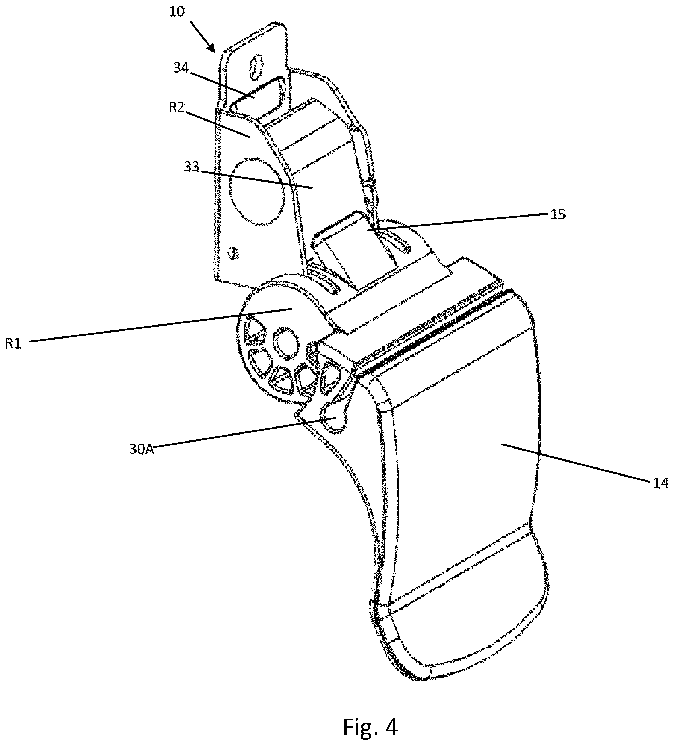

Die Verriegelungsvorrichtung 10 ist in Figur 4 im Detail dargestellt. Die Verriegelungsvorrichtung 10 umfasst eine erste Riegeleinheit R1, die dazu ausgestaltet ist, die Rückenlehne 12 freizugeben und festzulegen und eine zweite Riegeleinheit R2, die dazu ausgestaltet ist, die Gurtanordnung 13 freizugeben und festzulegen.

Wird das Griffelement 14 betätigt, insbesondere bevorzugt um eine Drehachse rotiert, so wird hierdurch auch die erste Riegeleinheit R1 durch das Griffelement 14 betätigt, also mit einer Kraft beaufschlagt. Das Griffelement 14 ist an einem zylindrischen Körper angeordnet bzw. mit dem zylindrischen Körper verbunden oder einstückig ausgeführt. Der zylindrische Körper ist drehbar um die Drehachse gelagert angeordnet. Hierdurch ist das Griffelement 14 zusammen mit dem zylindrischen Körper um die Drehachse rotierbar. Die Verriegelungsvorrichtung 10 ist dazu ausgestaltet, dass durch ein Betätigen des Griffelements 14 die Rückenlehne 12 und/oder die Gurtanordnung 13 freigegeben und festgelegt werden kann. Das Griffelement 14 kann daher auch als Betätigungselement bezeichnet werden. Das Griffelement 14 weist eine zungenförmige Geometrie auf. Ein freies distales Ende des Griffelements 14 ist von der Rückenlehne 12 weggeneigt. Dadurch kann das Griffelement 14 leichter bedient werden. Das Griffelement 14 wird zum Betätigen der Verriegelungsvorrichtung 10 verlagert. Anders gesagt, kann die Position des Griffelements 14 durch eine manuelle Manipulation verändert werden, insbesondere durch Ziehen. Beim Betätigen des Griffelements 14 wird das Griffelement 14 teilweise um die Drehachse bewegt. So kann durch ein Ziehen am Griffelement 14 die Rückenlehne 12 und/oder die Gurtanordnung 13 freigegeben und anschließend, durch das Loslassen des Griffelements 14 und dessen zurückfedernde Verlagerung wieder festgelegt werden.

Die zweite Riegeleinheit R2 ist als eine im Wesentlichen übliche Gurtsicherung ausgebildet. Die zweite Riegeleinheit R2 umfasst ein Klemmelement 33, das um eine weitere Drehachse rotierbar ist, die von der Drehachse der ersten Riegeleinheit R1 verschieden ist. Die zweite Riegeleinheit R2 klemmt im nicht ausgelenkten Zustand des Griffelements 14 ein Gurtband der Gurtanordnung 13 ein. Die zweite Riegeleinheit R2 weist dazu ein Federelement auf. Das Federelement kann beispielsweise als eine Torsionsfeder ausgebildet sein. Genauer gesagt beaufschlagt das Federelement das Klemmelement 33 der zweiten Riegeleinheit R2 mit einer Rückstellkraft, sodass das Klemmelement 33 bei nicht betätigten Griffelement 14 die Gurtanordnung 13 festlegt. Die zweite Riegeleinheit R2 weist eine Einbuchtung 34 auf, in die das Klemmelement 33 das Gurtband hineinpresst. Bei einem betätigten Griffelement 14 wirkt die Rückstellkraft gegen die Auslenkung des Griffelements 14, sodass bei loslassen des Griffelements 14 das Griffelement 14 wieder in eine Ausgangsposition zurückkehrt und das Gurtband festklemmt.

Die erste Riegeleinheit R1 ist mit der zweiten Riegeleinheit R2 gekoppelt, sodass eine Bewegung bzw. eine Kraft von der ersten Riegeleinheit R1 auf die zweite Riegeleinheit R2 übertragbar ist. Dazu weist die erste Riegeleinheit R1 einen Fortsatz 15 auf. Der Fortsatz 15 ist an dem zylindrischen Körper angeordnet. Der Fortsatz 15 rotiert mit dem Griffelement 14 um die Drehsachse. Ferner weist der Fortsatz 15 eine stegartige Geometrie auf. Der Fortsatz 15 kann mit der zweiten Riegeleinheit R2 in Kontakt stehen bzw. derart an der ersten Riegeleinheit R1 angeordnet sein, dass eine Kraft bzw. eine Bewegung von der ersten Riegeleinheit auf die zweite Riegeleinheit R2 durch Betätigen des Griffelements 14 übertragbar ist. Der Fortsatz 15 wirkt mit der zweiten Riegeleinheit R2 zusammen, sodass eine Bewegung und/oder eine Kraft von der ersten Riegeleinheit R1 auf die zweite Riegeleinheit R2 übertragbar ist. Genauer gesagt, ist der Fortsatz 15 beim Betätigen des Griffelements 14 mit dem Klemmelement 33 in Kontakt und bewirkt, dass das Klemmelement 33 entgegen der Rückstellkraft um die Drehachse der zweiten Riegeleinheit R2 rotiert.

Die erste Riegeleinheit R1 und die zweite Riegeleinheit R2 sind auf diese Art und Weise durch das Griffelement 14 im Wesentlichen zeitgleich betätigbar. Anders gesagt, kann eine Bewegung der ersten Riegeleinheit R1 auf die zweite Riegeleinheit R2 übertragen werden. In anderen Worten ist die zweite Riegeleinheit R2 indirekt über die erste Riegeleinheit R1 mit dem Griffelement 14 wirkverbunden.

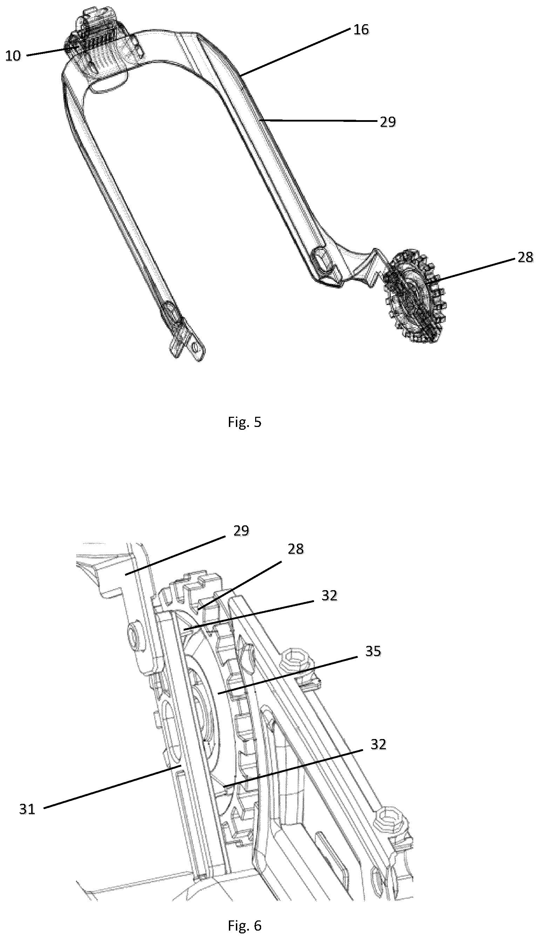

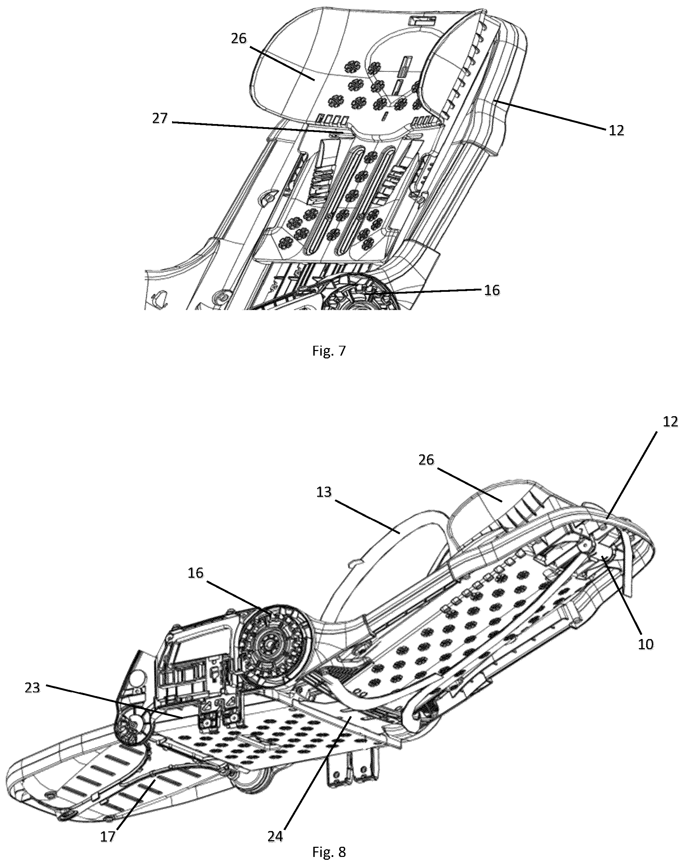

Figur 5 und Figur 6 zeigen jeweils einen Arretiermechanismus 16. Der Arretiermechanismus 16 ist ebenfalls in Figur 7 im eingebauten Zustand dargestellt. Der Arretiermechanismus 16 weist ein Sternrad 28 und eine Betätigungsstange 29 auf. Die Betätigungsstange 29 weist eine im Wesentlichen U-förmige Geometrie auf. Die erste Riegeleinheit R1 ist mit der Betätigungsstange 29 über ein Gelenk 30 verbunden. Das Gelenk 30 weist vorzugsweise eine Gelenkaussparung 30A im Griffelement 14 auf, in welche ein Bolzen des Gelenks 30 eingreift, welcher wiederum mit einer entsprechenden Aussparung an der Betätigungsstange 29 in formschlüssigem Eingriff steht. Dadurch ist es möglich, die Rotation des Griffelements 14 um die Drehachse in eine im Wesentlichen lineare Bewegung zu transferieren. Die Betätigungsstange 29 erstreckt sich im eingebauten Zustand entlang der Rückseite der Rückenlehne 12 (vgl. Figur 2). Die Betätigungsstange 29 weist an einem axialen Ende ein Kopplungselement 31 auf. Das Kopplungselement 31 umfasst zwei Vorsprünge 32, die mit Kulissen 35 in dem Sternrad 28 zusammenwirken, sodass das Sternrad 28 in einer Richtung orthogonal zur Bewegungsrichtung der Betätigungsstange 29 bzw. des Kopplungselements 31 verschoben werden kann.

Das Sternrad 28 ist konzentrisch um eine Schwenkachse der Rückenlehne 12 angeordnet. Das Sternrad 28 weist eine kreisförmige Geometrie auf. In Umfangsrichtung sind an dem Sternrad 28 Zähne verteilt angeordnet, die in radialer Richtung von dem Sternrad 28 abstehen. Die Zähne sind gleichmäßig voneinander beabstandet. Die Zähne dienen dazu, dass das Sternrad 28 und somit die Rückenlehne 12 bei nicht betätigtem Griffelement 14 in einer Position arretiert ist. Das Sternrad 28 weist eine ringförmige Nut auf. In der ringförmigen Nut sind die Kulissen 35 angeordnet, die mit den Vorsprüngen 32 des Kopplungselements 31 zusammenwirken. Die Vorsprünge 32 und die Kulissen 35 weisen korrespondierende schräge Flächen auf, die bei einer linearen Bewegung der Betätigungsstange 29 das Sternrad 28 in einen entkoppelten Zustand überführen. Am Sternrad 28 ist ein Federelement angeordnet, welches das Sternrad 28 mit einer Rückstellkraft beaufschlagt. Durch die Rückstellkraft kann das Sternrad 28 von der nicht gekoppelten Position in die gekoppelte Position zurück überführt werden. Anders gesagt, wirkt die Rückstellkraft der von der Betätigungsstange 29 auf das Sternrad 28 ausgebübten Kraft entgegen.

Figur 7 zeigt eine Detailansicht der Kopfstütze 26. Die Gurtanordnung 13 ist in Figur 7 ausgeblendet. Die Öffnungen 27 sind als Schlitz ausgebildet. An dem im montierten Zustand oberen freien Ende der Kopfstütze 26 ist ein Band angeordnet (nicht dargestellt). Durch Ziehen an dem Band kann die Kopfstütze 26 entriegelt werden, sodass diese entlang der Rückenlehne 12 linear verschoben werden kann. Die Kopfstütze 26 ist dazu in einer Führung angeordnet. Während des Verschiebens kann die zur Verfügung stehende Länge der Schultergurte gleichzeitig mit verändert werden. Mit Vorteil sind somit die Schultergurte bzw. ist die Gurtanordnung 13 automatisch an die Position der Kopfstütze 26 anpassbar.

Figur 8 zeigt den in Figur 1 dargestellten Kindersitz 11, wobei die Rückenlehne 12 nach hinten geneigt ist, sodass ein Kind eine liegende Position einnehmen kann. Zwischen der Rückenlehne 12 und dem Sitzelement 23 ist eine Sitzplatte 24 angeordnet. Die Sitzplatte 24 weist flexible Eigenschaften auf bzw. ist aus einem flexiblen Material hergestellt. Die Sitzplatte 24 ist aus einem dünnwandigen Material hergestellt. Die Sitzplatte 24 schließt eine Lücke zwischen der Rückenlehne 12 und dem Sitzelement 23. Das Sitzelement 23 weist einen Freiraum auf, der sich im Inneren des Sitzelements 23 erstreckt. Der Freiraum erstreckt sich im Wesentlichen parallel zur Unterseite des Sitzelements 23. Der Freiraum kann als ein tiefer Spalt bezeichnet werden. **In** dem Freiraum ist die Sitzplatte 24 beweglich angeordnet und wird bei Vergrößerung der Lücke zwischen dem Sitzelement 23 und der Rückenlehne 12 aus dem Freiraum herausgezogen. Anders gesagt, ist die Sitzplatte 24 in dem Freiraum geführt. Bei einem Verstellen der Neigung der Rückenlehne 12 vergrößert bzw. verkleinert sich die Lücke zwischen der Rückenlehne 12 und dem Sitzelement 23. Durch den Freiraum kann der außerhalb des Freiraums befindliche Teil der Sitzplatte 24 variabel an die Lücke angepasst werden.

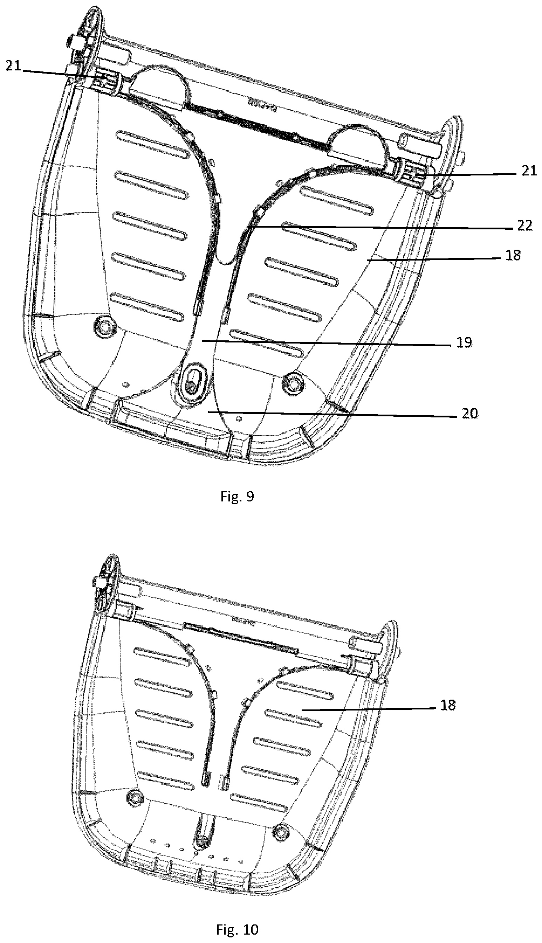

Die Figuren 9 bis 11 zeigen eine Fußstützeinheit 17 bzw. Komponenten der Fußstützeinheit 17. Die Fußstützeinheit 17 ist an dem Sitzelement 23 angeordnet. Genauer ist die Fußstützeinheit 17 an einer der Rückenlehne 12 gegenüberliegenden Seite des Sitzelements 23 angeordnet. Die Fußstützeinheit 17 umfasst eine Fußstützkomponente 18, die dazu vorgesehen ist, im Betrieb als Stütze für die Füße eines Kindes zu dienen, und eine Entriegelungskomponente 19, die dazu vorgesehen ist, die Fußstützeinheit 17 in einer Position zu arretieren. Durch die Entriegelungskomponente 19 kann die Arretierung gelöst und wiederhergestellt werden.

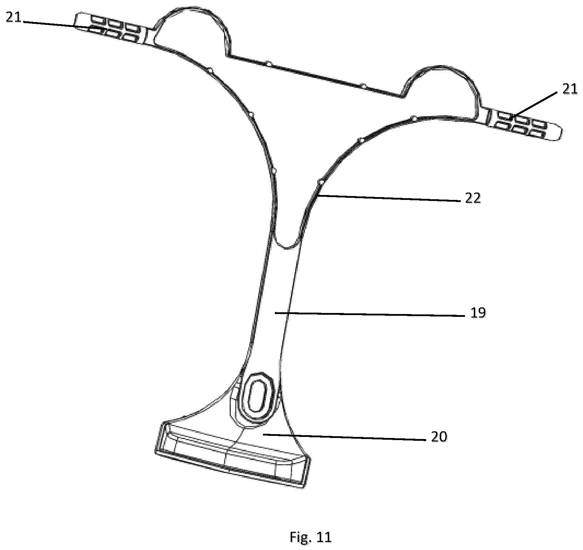

Die Entriegelungskomponente 19 ist in Figur 11 im Detail dargestellt. Die Entriegelungskomponente 19 spannt eine im Wesentlichen dreieckige Geometrie auf. Die Entriegelungskomponente 19 umfasst einen Entriegelungsgriff 20. Der Entriegelungsgriff 20 ist mit zwei Stegabschnitten 22 verbunden, die sich von dem Entriegelungsgriff 20 weg erstrecken. Die Stegabschnitte 22 sind jeweils mit einem Sicherungsstift 21 verbunden. Die beiden Sicherungsstifte 21 sind wiederum ebenfalls durch einen Stegabschnitt 22 verbunden. An den Sicherungsstiften 21 weist der Stegabschnitt 22, der die beiden Sicherungsstifte 21 verbindet, jeweils einen halbkreisförmigen Abschnitt auf. Zwischen den beiden halbkreisförmigen Abschnitten verläuft der Stegabschnitt 22 in einer geraden Linie. Die halbkreisförmigen Abschnitte dienen als Federelement. Zum Entriegeln der Fußstützeinheit wird an dem Entriegelungsgriff 20 gezogen. Beim Ziehen an dem Entriegelungsgriff 20 bewegen sich die Sicherungsstifte 21 aufeinander zu und werden aus einer gekoppelten Position in eine nicht gekoppelte Position überführt. Dadurch werden die halbkreisförmigen Abschnitte gestaucht und die Sicherungsstifte 21 mit einer Rückstellkraft beaufschlagt. Bei einem Loslassen des Entriegelungsgriffs 20 bewirkt die Rückstellkraft, dass sich die Sicherungsstifte 21 wieder in einen gekoppelten Zustand mit dem Sitzelement 23 überführt werden.

Die Fußstützkomponente 18 weist eine Geometrie auf, die mit der Geometrie der Entriegelungskomponente 19 korrespondiert. Genauer gesagt weist die Fußstützkomponente eine Wandung auf, an der die Stegabschnitte 22 der Entriegelungskomponente anliegen bzw. geführt sind. Die Fußstützkomponente 18 ist in Figur 10 im Detail dargestellt.

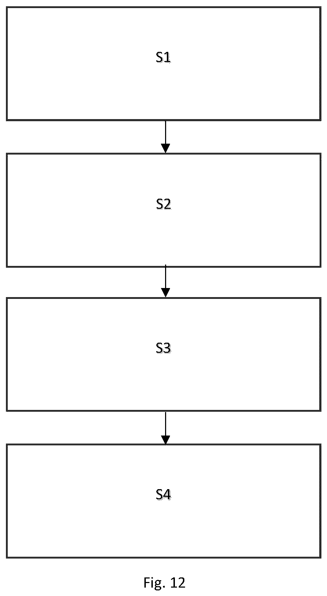

Figur 12 zeigt eine schematische Darstellung eines Verfahrens zum Einstellen der Neigung der Rückenlehne 12 des Kindersitzes 11. In einem ersten Schritt S1 wird die Verriegelungsvorrichtung 10 betätigt und in einen entkoppelten Zustand überführt. Vorzugsweise wird die Verriegelungsvorrichtung durch Ziehen am Griffelement 14 betätigt. Anschließend wird in einem zweiten Schritt S2 die Neigung der Rückenlehne 12 eingestellt. In einem dritten Schritt S3 erfolgt das Einstellen der Gurtanordnung 13. Die Schritte S2 und S3 können im Wesentlichen zeitgleich erfolgen. In einem vierten Schritt S4 wird die Verriegelungsvorrichtung 10 wieder in den gekoppelten Zustand überführt.

Andere Ausführungsformen der vorliegenden Erfindung sind möglich und können von Fachpersonen bei der Anwendung des beanspruchten Gegenstands aus dem Studium der Figuren, der Offenbarung und der beigefügten Ansprüche verstanden und ausgeführt werden. Insbesondere können die jeweiligen Teile/Funktionen der jeweiligen oben beschriebenen Ausführungsform auch miteinander kombiniert werden. Ferner können verschiedene Schritte des Verfahrens in einer anderen Reihenfolge ausgeführt werden, als hier offenbart. In den Ansprüchen schließt das Wort "umfassend" andere Elemente oder Schritte nicht aus und der unbestimmte Artikel "ein" oder "eine" schließt eine Mehrzahl nicht aus. Die bloße Tatsache, dass bestimmte Maßnahmen in voneinander abhängigen Ansprüchen genannt werden, bedeutet nicht, dass eine Kombination dieser Maßnahmen nicht vorteilhaft sein kann. Etwaige Bezugszeichen in den Ansprüchen sollten nicht als Einschränkung des Umfangs der Ansprüche ausgelegt werden.

### Bezugszeichenliste:

- R1: erste Riegeleinheit
- R2: zweite Riegeleinheit
- 10: Verriegelungsvorrichtung
- 11: Kindersitz
- 12: Rückenlehne
- 13: Gurtanordnung
- 14: Griffelement
- 15: Fortsatz
- 16: Arretiermechanismus
- 17: Fußstützeinheit
- 18: Fußstützkomponente
- 19: Entriegelungskomponente
- 20: Entriegelungsgriff
- 21: Sicherungsstifte
- 22: Stegabschnitte
- 23: Sitzelement
- 24: Sitzplatte
- 25: Freiraum
- 26: Kopfstütze
- 27: Öffnung
- 28: Sternrad
- 29: Betätigungsstange
- 30: Gelenk
- 30A: Gelenkaussparung
- 31: Kopplungselement
- 32: Vorsprung
- 33: Klemmelement
- 34: Einbuchtung
- 35: Kulisse

## Patentansprüche

1. Verriegelungsvorrichtung (10) für einen Kindersitz (11), wobei die Verriegelungsvorrichtung (10) zum Freigeben und Festlegen einer Rückenlehne (12), insbesondere zum Einstellen einer Neigung der Rückenlehne (12), und/oder einer Gurtanordnung (13), insbesondere zum Einstellen einer Länge von Gurtbändern der Gurtanordnung (13), ausgestaltet ist.

2. Verriegelungsvorrichtung nach Anspruch 1, wobei die Verriegelungsvorrichtung (10) ein Griffelement (14) umfasst, wobei die Verriegelungsvorrichtung (10) dazu ausgestaltet ist, dass durch ein Betätigen des Griffelements (14) die Rückenlehne (12) und/oder die Gurtanordnung (14) freigegeben und festgelegt werden kann.

3. Verriegelungsvorrichtung (10) nach Anspruch 2, umfassend:
eine erste Riegeleinheit (R1), die dazu ausgestaltet ist, die Rückenlehne (12) freizugeben und festzulegen,
eine zweite Riegeleinheit (R2), die dazu ausgestaltet ist, die Gurtanordnung (13) freizugeben und festzulegen,
wobei die erste Riegeleinheit (R1) mit der zweiten Riegeleinheit (R2) gekoppelt ist, sodass die erste Riegeleinheit (R1) und die zweite Riegeleinheit (R2) durch das Griffelement (14) betätigbar sind.

4. Verriegelungsvorrichtung (10) nach Anspruch 3, wobei die erste Riegeleinheit (R1) einen Fortsatz (15) umfasst, der mit der zweiten Riegeleinheit (R2) zusammenwirkt, sodass eine Bewegung und/oder eine Kraft von der ersten Riegeleinheit (R1) auf die zweite Riegeleinheit (R2) übertragbar ist.

5. Verriegelungsvorrichtung (10) nach Anspruch 3 oder 4, wobei die zweite Riegeleinheit (R2) ein Federelement aufweist, das dazu ausgestaltet ist, eine Rückstellkraft bereitzustellen.

6. Verriegelungsvorrichtung (10) nach einem der Ansprüche 3 bis 5, wobei die das Griffelement (14) in eine erste Position und in eine zweite Position überführbar ist, wobei in der ersten Position die zweite Riegeleinheit (R2) betätigt ist und in der zweiten Position die erste Riegeleinheit (R1) und die zweite Riegeleinheit (R2) betätigt sind.

7. Verriegelungsvorrichtung (10) nach einem der Ansprüche 3 bis 6, wobei der Arretiermechanismus (16) ein Sternrad (28) umfasst, das konzentrisch um eine Schwenkachse der Rückenlehne (12) angeordnet ist, wobei das Sternrad (28) mittels einer Betätigungsstange (29) mit der Verriegelungsvorrichtung (10) verbunden ist,
wobei die Betätigungsstange (29) vorzugsweise über ein Gelenk (30) mit der ersten Riegeleinheit (R1) mechanisch gekoppelt ist,
wobei das Sternrad (28) zumindest eine Kulisse (35) aufweist, die mit einer korrespondierenden Geometrie der Betätigungsstange (29) derart zusammenwirkt, dass das Sternrad (28) von einem gekoppelten Zustand in einen nicht gekoppelten Zustand überführbar ist.

8. Verriegelungsvorrichtung nach Anspruch 7, wobei der Arretiermechanismus (16) ein Federelement umfasst, das das Sternrad (28) mit einer Rückstellkraft beaufschlagt.

9. Fußstützeinheit (17) für einen Kindersitz, wobei die Fußstützeinheit (17) eine Fußstützkomponente (18) und eine Entriegelungskomponente (19) umfasst, wobei zumindest die Entriegelungskomponente (19) einteilig ausgebildet ist.

10. Fußstützeinheit (17) nach Anspruch 9, wobei die Entriegelungskomponente (19) einen Entriegelungsgriff (20) und zwei Sicherungsstifte (21) umfasst, wobei die zwei Sicherungsstifte (21) und der Entriegelungsgriff (20) durch flexible Stegabschnitte (22) miteinander verbunden sind.

11. Fußstützeinheit (17) nach Anspruch 10, wobei die Stegabschnitte (22) zumindest abschnittsweise Federeigenschaften aufweisen, sodass auf zwei Sicherungsstifte (21) jeweils eine Rückstellkraft wirkt.

12. Kindersitz (11), insbesondere zur Verwendung mit einem Chassis, mit einem Sitzelement (23) und einer Rückenlehne (12), umfassend eine Verriegelungsvorrichtung (10) nach einem der Ansprüche 1 bis 8 und/oder eine Fußstützeinheit (17) nach einem der Ansprüche 9 bis 11.

13. Kindersitz (11) nach Anspruch 12, wobei der Kindersitz (11) eine flexible Sitzplatte (24) aufweist, die beweglich zwischen dem Sitzelement (23) und der Rückenlehne (12) angeordnet ist, wobei das Sitzelement (23) einen Freiraum (25) umfasst, in dem die flexible Sitzplatte (24) geführt ist.

14. Kindersitz (11) nach Anspruch 13, wobei die Rückenlehne (12) eine Kopfstütze (26) umfasst, die beweglich an der Rückenlehne (12) angeordnet ist, wobei zwei Schultergurte einer Gurtanordnung (13) jeweils durch eine Öffnung (27) der Kopfstütze (26) geführt und mit der Rückenlehne (12) verbunden sind, sodass durch ein Bewegen der Kopfstütze (26) die Position und/oder Länge der Schultergurte der Gurtanordnung (13) einstellbar sind.

15. Verfahren zum Einstellen der Neigung eines Kindersitzes (11) mit einer Verriegelungsvorrichtung (10) nach einem der Ansprüche 1 bis 8, umfassend die Schritte:
Betätigen der Verriegelungsvorrichtung (10),
Einstellen der Neigung der Rückenlehne (12) und/oder
Einstellen der Gurtanordnung (13), insbesondere zeitgleiches Einstellen der Gurtanordnung (13) und der Rückenlehne (12).
